# EUROPÄISCHE PATENTSCHRIFT

(11) **EP 2 607 722 B1**
(45) Veröffentlichungstag und Bekanntmachung des Hinweises auf die Patenterteilung: **26.02.2014**
(21) Anmeldenummer: 11010107.8
(22) Anmeldetag: 22.12.2011
(51) Int. Cl.: F16B 23/00, A61C 8/00

(54) **Verbindungsschraube für ein Dentalimplantat**
Connecting screw for a dental implant
Vis de liaison pour un implant dentaire

(43) Veröffentlichungstag der Anmeldung: 26.06.2013
(73) Patentinhaber: Straumann Holding AG, 4002 Basel (CH)
(72) Erfinder: Streff, Patrick, 4002 Basel (CH); Suter, Edmund, 4002 Basel (CH)
(74) Vertreter: Schaad, Balass, Menzl & Partner AG

(56) Entgegenhaltungen:
- EP-A1- 1 972 297
- WO-A1-00/38588
- DE-A1-102004 026 769

## Beschreibung

Die vorliegende Erfindung betrifft eine Verbindungsschraube für ein Dentalimplantat.

Dentalprothesen mit einem im Kiefer eingesetzten Dentalimplantat (auch Verankerungsteil genannt) und einem darauf befestigten Abutment (auch Aufbauteil oder Sekundärteil genannt) sind hinreichend als Zahnersatz bekannt, wobei diese beiden Teile auch als Einheit (d.h. einteilig und einstückig) ausgebildet sein können. Das Abutment, welches bevorzugt aus Metall oder Keramik hergestellt ist, wobei auch Kunststoff- oder Polymerverbindungen möglich sind, wird dabei mittels einer Schraube kraft- und formschlüssig mit dem Dentalimplantat verbunden. Die Schraube ist bevorzugt aus Titan hergestellt, wobei jedoch auch Ausführungen aus Stahl möglich sind.

Das Einsetzen der dem Zahnprofil angepassten Prothese erfolgt im Allgemeinen, sobald das im Knochen des Patienten eingesetzte Implantat eingeheilt ist, und wird vom behandelnden Arzt ausgeführt. Ein Zahntechniklabor liefert die dazu erforderlichen Prothesenkomponenten, welche sich aus dem Abutment mit der darauf individuell angefertigten Zahnkrone oder Brücke und einer (Verbindungs-) Schraube zusammensetzen. Zur Fixierung des Abutments am Dentalimplantat wird das Abutment auf das Implantat aufgesetzt; anschliessend wird eine Verbindungsschraube durch eine Bohrung im Abutment eingeführt und dann in ein Innengewinde des Dentalimplantats eingeschraubt. Auf diese Weise werden das Abutment und das Dentalimplantat formschlüssig miteinander verbunden. Die Schraube wird im Allgemeinen mit einem Drehmoment von mehr als 30 Nm angezogen, in der Regel mit einem Drehmoment von etwa 35 Nm. Bedingt durch die geringen Platzverhältnisse im Mund und durch die Abmessungen der Zahnprothese müssen solche Verbindungsschrauben relativ klein ausgebildet sein, damit sie in der Zahnkrone Platz finden.

Eine Verbindungsschraube im Sinne der vorliegenden Erfindung kann nicht nur zur Befestigung eines Abutments an einem Dentalimplantat verwendet werden, sondern auch zur Befestigung einer Zahnkrone an einem Abutment, einem meso-Abutment oder einem (einteiligen) Dentalimplantat.

Eine derartige Verbindungsschraube ist beispielsweise aus der DE 20 2008 003 187 U1 bekannt. Die Verbindungsschraube kann auch zweiteilig ausgestaltet sein, wie dies z.B. in der EP 1 972 297 A1 offenbart ist.

Solche Verbindungsschrauben weisen typischerweise einen Schaftabschnitt und einen Kopfabschnitt auf. Üblicherweise hat der Schaftabschnitt einen kleineren Durchmesser als der Kopfabschnitt und weist ein Aussengewinde auf, das in das Innengewinde des Dentalimplantats oder Abutments eingeschraubt wird, während der Kopfabschnitt im verbundenen Zustand auf einer inneren Schulter in der Bohrung des Abutments bzw. der Krone aufliegt. Am Kopfabschnitt ist zudem üblicherweise ein Angriffsmittel für ein Drehwerkzeug angeformt, so dass mithilfe eines Drehwerkzeugs ein genügend grosses Drehmoment auf die Schraube übertragen werden kann.

Dieses Angriffsmittel kann beispielsweise als Aussen- oder Innensechskant oder auch als Aussen- oder Innentorx, auch Aussen- oder Innensechsrund genannt, ausgebildet sein. Die Norm EN DIN ISO 10664 beschreibt einen entsprechenden Innentorx für Schrauben und wird hiermit durch Verweis einbezogen.

Das Drehwerkzeug weist dem Angriffsmittel der Schraube entsprechende Gegenmittel auf. Passende Drehwerkzeuge zur Übertragung eines Drehmoments auf eine Schraube mit einem Innentorx sind beispielsweise ebenfalls in der Norm EN DIN ISO 10664 spezifiziert und werden hiermit durch Verweis einbezogen.

Eine alternative Ausgestaltung von Schraubenkopf und Drehwerkzeug ist beispielsweise in DE 10 2004 026 769 A1 offenbart.

Eine Schwierigkeit beim Verankern der Verbindungsschraube im Dentalimplantat besteht darin, dass eine Längsachse der Bohrung im Abutment bzw. der Krone unter Umständen nicht genau in der Verlängerung einer Längsachse des Innengewindes bzw. des Dentalimplantats liegt, sondern dass diese Längsachsen in einem gewissen Winkel zueinander stehen. Ein ähnlicher Fall liegt dann vor, wenn die Bohrung im Innern des Abutments oder der Zahnkrone gewinkelt ist. Durch eine solche Ausgestaltung der Bohrung kann die Austrittsöffnung der Bohrung in der Zahnkrone derart platziert werden, dass sie von aussen normalerweise nicht sichtbar ist, d.h. die Austrittsöffnung kann auf der lingualen oder palatalen Seite der Krone angeordnet werden. Es kann aber auch aufgrund der anatomischen Voraussetzungen bei einem bestimmten Patienten nötig sein, dass die Bohrung gewinkelt ist bzw. die Bohrung in der Krone und der Hohlraum im Implantat in einem Winkel zueinander stehen.

In beiden Fällen ist nicht nur das Einführen der Verbindungsschraube durch die Bohrung im Abutment bzw. der Krone in das Innengewinde des Dentalimplantats schwierig, sondern insbesondere auch das Festziehen der Schraube mithilfe eines Drehwerkzeugs: Ein solches Drehwerkzeug muss nicht nur durch die Bohrung hindurch mit dem Angriffsmittel an der Verbindungsschraube in Eingriff gebracht werden, sondern muss auch noch mit diesem derart zusammenwirken können, dass ein für die sichere Befestigung ausreichend grosses Drehmoment übertragen werden kann. Dazu müssen die Angriffsmittel an der Schraube und die Gegenmittel am Drehwerkzeug möglichst passgenau sein, damit das Werkzeug nicht zu viel Spiel hat und die Angriffsmittel nicht beschädigt werden.

Es ist daher eine Aufgabe der vorliegenden Erfindung, das Einführen eines Drehwerkzeugs und das Festziehen einer Verbindungsschraube auch dann zu erlauben, wenn die Längsachse der Bohrung im Abutment oder der Zahnkrone und die Längsachse des Innengewindes des Dentalimplantats in einem Winkel, insbesondere in einem spitzen Winkel, zueinander stehen oder wenn die Bohrung gewinkelt ist, d.h. für den Fall, dass das Drehwerkzeug nicht in der Verlängerung der zentralen Längsachse der Schraube in diese eingeführt werden kann.

Eine ähnliche Aufgabe wird beispielsweise durch die WO 2008/024062 A2 gelöst, bei welcher eine Zahnkrone einen gewinkelten Hohlraum aufweist. Um diese Zahnkrone an einem Implantat festzuschrauben, wird ein spezieller Schraubenzieher mit einem flexiblen Schaft verwendet. Dieser Schaft kann beispielsweise durch mehrere miteinander verbundene Drähte oder einen von Drähten umgebenen, flexiblen Kern, beispielsweise aus Plastik oder Kunststoff, gebildet sein. Dieser in WO 2008/024062 A2 offenbarte Schraubenzieher lässt sich im Bereich des Schafts verbiegen und so an den gewinkelten Hohlraum in der Zahnkrone anpassen.

Auch die WO 2008/116834 A1 offenbart einen speziellen Schraubenzieher, der das Festziehen einer Schraube in einem gewinkelten Hohlraum erlaubt. Dieser Schraubenzieher weist eine Spitze mit einem im Wesentlichen gerundeten Querschnitt in der axialen Ebene und einem im Wesentlichen polygonalen Querschnitt in der radialen Ebene auf. Zudem hat das Polygon mindestens zwei unterschiedlich lange Seiten, um die Übertragung eines Drehmoments auf eine Verbindungsschraube zu verbessern, wobei die Verbindungsschraube eine entsprechend geformte Angriffsvertiefung aufweisen muss, in welche der Schraubenzieher gemäss WO 2008/116834 A1 eingeführt werden kann.

Im Stand der Technik wird die oben beschriebene Aufgabe also dadurch gelöst, dass ein speziell geformter Schraubenzieher verwendet wird, wobei unter Umständen die Schraube entsprechend angepasst sein muss.

Die vorliegende Erfindung soll nun eine einfachere Lösung zur Verfügung stellen, die ebenfalls die Übertragung eines Drehmoments auf eine Verbindungsschraube für ein Dentalimplantat erlaubt, wenn die Längsachse des Drehwerkzeugs nicht mit der Längsachse der Verbindungsschraube übereinstimmt. Insbesondere soll die Verwendung eines handelsüblichen Drehwerkzeugs ermöglicht werden.

Diese Aufgabe wird gelöst durch die Bereitstellung der Verbindungsschraube gemäss Anspruch 1. Bevorzugte Ausführungsformen sind Gegenstand der abhängigen Ansprüche.

Die erfindungsgemässe Verbindungsschraube für ein Dentalimplantat umfasst einen Schaftabschnitt mit einem unteren Schraubenende und einen Kopfabschnitt mit einem dem unteren Schraubenende gegenüberliegenden oberen Schraubenende, welche entlang einer zentralen Längsachse C der Verbindungsschraube angeordnet sind. Der Schaftabschnitt ist typischerweise im Wesentlichen zylinderförmig oder konisch und weist ein Aussengewinde zur Verbindung mit dem Dentalimplantat auf. Der Kopfabschnitt ist typischerweise ebenfalls im Wesentlichen zylinderförmig oder konisch und weist eine zum oberen Schraubenende hin offene, sacklochförmige Ausnehmung auf, in welcher ein Angriffsmittel für ein Drehwerkzeug angeformt ist. Mit diesem Angriffsmittel kann das Drehwerkzeug lösbar verbunden werden, so dass ein Drehmoment vom Drehwerkzeug auf das Angriffsmittel und damit auf die Verbindungsschraube übertragen werden kann.

Die sacklochförmige Ausnehmung weitet sich unterhalb des Angriffsmittels zum unteren Schraubenende hin radial auf und bildet einen Hinterschnitt.

Das Angriffsmittel weist mehrere in radialer Richtung gegen innen gerichtete und in Umfangsrichtung gleichmässig verteilte Angriffsvorsprünge mit je einem inneren Scheitel auf und jeweils mittig zwischen zwei benachbarten Angriffsvorsprüngen je eine in radialer Richtung nach aussen gerichtete Angriffsvertiefung mit je einem äusseren Scheitel auf.

Jeweils zwei sich diametral gegenüberliegende äussere Scheitel haben einen ersten Abstand A voneinander, und jeweils zwei sich diametral gegenüberliegende innere Scheitel haben einen zweiten Abstand B voneinander. Vorzugsweise ist das Verhältnis A/B des ersten Abstands A zum zweiten Abstand B grösser als 1.4.

Über die Angriffsvorsprünge und Angriffsvertiefungen erstreckt sich mindestens eine Antriebsfläche, welche durch eine obere, radial nach innen in Richtung zum unteren Schraubenende hin abfallende Stirnfläche und eine untere, vom Hinterschnitt radial nach innen zum oberen Schraubenende hin ansteigende Hinterschnittfläche begrenzt wird. Zwischen der Stirnfläche und der mindestens einen Antriebsfläche verläuft eine obere Grenzlinie, und zwischen der Hinterschnittfläche und der mindestens einen Antriebsfläche verläuft eine untere Grenzlinie.

Die obere und die untere Grenzlinie sind im Bereich der äusseren Scheitel der Angriffsvertiefungen um einen äusseren Abstand Dₐ voneinander beabstandet.

Die erfindungsgemässe Verbindungsschraube ist dadurch gekennzeichnet, dass das Verhältnis Dᵢ/Dₐ von einem inneren Abstand Dᵢ zwischen der oberen Grenzlinie und der unteren Grenzlinie im Bereich der inneren Scheitel der Angriffsvorsprünge zum äusseren Abstand Dₐ kleiner als 0.5 ist.

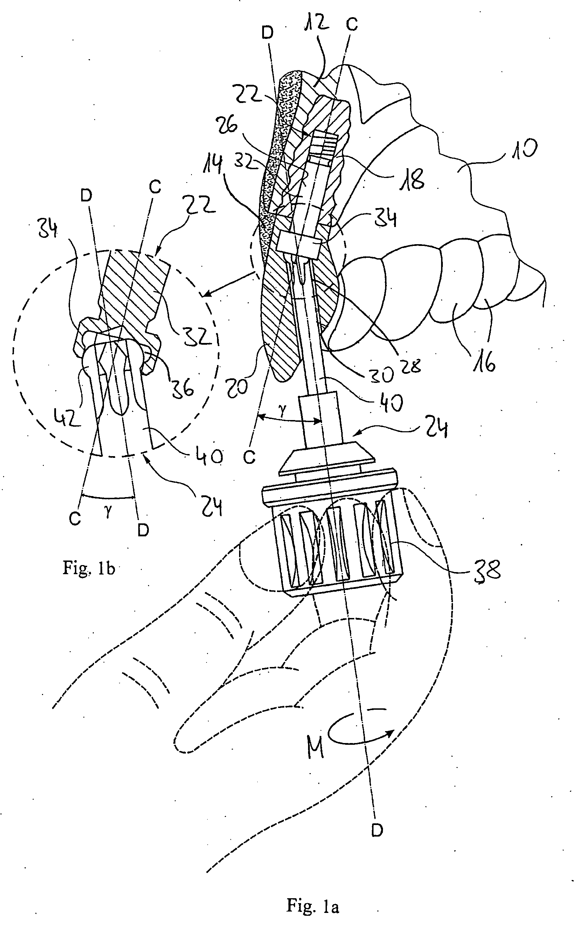

Durch die erfindungsgemässe Ausgestaltung des Angriffsmittels wird erreicht, dass ein Drehwerkzeug auch in einem Winkel in das Angriffsmittel der Schraube eingeführt werden kann, d.h. wenn die Längsachse C der Verbindungsschraube und die Rotationsachse D des Drehwerkzeugs in einem Winkel γ zueinander stehen. Zur Definition dieses Winkels γ wird auf die Ausführungen zu den Figuren 1a und 1b weiter unten verwiesen, welche für die gesamte Anmeldung gelten.

Dieser Winkel γ ist typischerweise ein spitzer Winkel und kann bis zu 20°, vorzugsweise bis zu 30°, betragen. Gleichzeitig wird aber die Übertragung eines Drehmoments vom Drehwerkzeug auf die Verbindungsschraube in keiner Weise beeinträchtigt. So kann ein genügend grosses Drehmoment übertragen werden, wodurch die sichere Verankerung der Verbindungsschraube gewährleistet ist. Insbesondere kann problemlos ein Drehmoment von bis zu 35 Nm übertragen werden, ohne dass die Verbindungsschraube beschädigt oder sonst wie beeinträchtigt würde. Typischerweise werden - je nach Form und Art von Implantat, Abutment, Krone und Schraube - Drehmomente von etwa 15 bis 35 Nm übertragen.

Ein wichtiger Vorteil der erfindungsgemässen Verbindungsschraube liegt darin, dass zum Eindrehen ein handelsübliches Drehwerkzeug verwendet werden kann. Es ist also nicht nötig, ein speziell ausgestaltetes oder modifiziertes Drehwerkzeug zu verwenden.

Die äusseren Scheitel der Angriffsvertiefungen sind, ebenso wie dies beispielsweise beim Standard-Innentorx oder -Innensechskant der Fall ist, Scheitellinien. Letztere verlaufen zumindest annähernd parallel zur zentralen Längsachse C der Verbindungsschraube und haben jeweils auf derselben Höhe und in radialer Richtung gemessen denselben Abstand von der zentralen Längsachse C.

Im Bereich der inneren Scheitel der Angriffsvorsprünge liegen die obere und die untere Grenzlinie näher beieinander. Der innere Abstand Dᵢ im Bereich der inneren Scheitel ist also kleiner als der äussere Abstand Dₐ im Bereich der äusseren Scheitel, und die beiden Grenzlinien nähern sich von den äusseren Scheiteln zu den inneren Scheiteln hin an.

Dadurch, dass sich die sacklochförmige Ausnehmung unterhalb des Angriffsmittels aufweitet und einen Hinterschnitt bildet, kann die Spitze des Drehwerkzeugs im unteren Bereich der Ausnehmung weiter nach Aussen ragen, d.h. weiter von der zentralen Längsachse C der Verbindungsschraube weg. Zusammen mit dem oben spezifizierten Verhältnis Dᵢ/Dₐ erlaubt dies, die Längsachse D des Drehwerkzeugs gegenüber der Längsachse C der Verbindungsschraube abzuwinkeln, ohne dabei die Drehmomentübertragung zu beeinträchtigen. Insbesondere weisen Drehwerkzeug und Verbindungsschraube immer noch eine genügend grosse Kontaktfläche auf, die im Wesentlichen radial liegt.

In einer bevorzugten Ausführungsform ist das Verhältnis Dᵢ/Dₐ kleiner als 0.3, vorzugsweise kleiner als 0.2 und besonders bevorzugt kleiner als 0.1. Das Verhältnis Dᵢ/Dₐ ist hauptsächlich dann kleiner, wenn der innere Abstand Dᵢ kleiner ist, d.h. wenn die obere und die untere Grenzlinie im Bereich der inneren Scheitel näher beieinander liegen. Durch die Annäherung der oberen und der unteren Grenzlinie im Bereich der inneren Scheitel, d.h. durch die Verkleinerung des inneren Abstands Dᵢ, wird der Winkel γ grösser, unter welchem das Drehwerkzeug noch in das Angriffsmittel eingeführt und das gewünschte Drehmoment übertragen werden kann.

Gemäss einer bevorzugten Ausführungsform berühren sich die obere und die untere Grenzlinie im Bereich der inneren Scheitel der Angriffsvorsprünge wenigstens annähernd, vorzugsweise ganz. Das heisst, dass sich die obere und die untere Grenzlinie, welche im Wesentlichen in Umfangsrichtung verlaufen, immer weiter annähern, wenn sie sich in Umfangsrichtung einem inneren Scheitel nähern, und sich beim Scheitel vorzugsweise berühren, d.h. zusammenfallen, und dabei einen Scheitelpunkt bilden. Dadurch haben die Angriffsvorsprünge eine Pyramidenspitzförmige Kontur. Die inneren Scheitel der Angriffsvorsprünge sind daher zumindest annähernd punktförmig; vorzugsweise handelt es sich dabei um Scheitelpunkte. Diese Scheitelpunkte liegen allesamt in einer senkrecht zur zentralen Längsachse C der Verbindungsschraube liegenden Ebene und haben, in dieser Ebene gemessen, denselben Abstand von der zentralen Längsachse C der Schraube. Somit liegen sämtliche Scheitelpunkte auf einem Kreis, der in einer senkrecht zur Längsachse der Verbindungsschraube liegenden Ebene liegt, und dessen Mittelpunkt auf der zentralen Längsachse C der Verbindungsschraube liegt.

Alternativ ist es auch möglich, dass sich die obere und die untere Grenzlinie im Bereich der inneren Scheitel nur annähernd berühren, d.h. dass das Verhältnis Dᵢ/Dₐ zwar klein ist, aber > 0. Auch in diesem Fall nimmt der Abstand zwischen den beiden Grenzlinien immer weiter ab, wenn sie sich in Umfangsrichtung dem inneren Scheitel nähern; die obere und die untere Grenzlinie berühren sich aber nie ganz.

Der innere Abstand Dᵢ zwischen der oberen und der unteren Grenzlinie beträgt vorzugsweise weniger als 0.1 mm, besonders bevorzugt weniger als 0.05 mm.

Der äussere Abstand Dₐ beträgt typischerweise zwischen 0.3 mm und 0.8 mm, vorzugsweise zwischen 0.3 mm und 0.6 mm, und insbesondere 0.4 mm.

Gemäss einer bevorzugten Ausführungsform ist eine Verbindungslinie zwischen der oberen und der unteren Grenzlinie am inneren Scheitel zur zentralen Längsachse C der Verbindungsschraube hin gewölbt, d.h. gerundet. Dies vereinfacht das Einführen des Drehwerkzeugs unter einem Winkel. Dabei kann die Krümmung der Grenzlinie überall gleich gross sein, so dass die Grenzlinie einen Teil eines Kreises bildet, oder die Krümmung kann in Richtung zur unteren Grenzlinie hin zu- oder abnehmen, wobei sie bevorzugt abnimmt. Der Radius einer solchen gewölbten Verbindungslinie kann beispielsweise etwa 0.1 mm betragen.

In einer bevorzugten Ausführungsform ist das Verhältnis A/B grösser als 1.4, insbesondere grösser als 1.45, vorzugsweise jedoch nicht grösser als 1.55, und besonders bevorzugt ungefähr 1.5. Auch hier gilt tendenziell, dass durch ein grösseres Verhältnis A/B ein grösserer Winkel γ ermöglicht wird, solange gleichzeitig die Kontaktfläche zwischen dem Drehwerkzeug und dem Angriffsmittel der Schraube genügend gross ist.

Vorzugsweise beträgt der erste Abstand A 1.8 mm bis 2.0 mm, insbesondere 1.9 mm.

Vorzugsweise beträgt der zweite Abstand B 1.2 mm bis 1.4 mm, insbesondere 1.3 mm.

Das Angriffsmittel der erfindungsgemässen Verbindungsschraube weist vorzugsweise je zwischen 3 und 8 Angriffsvorsprünge und Angriffsvertiefungen auf.

In einer bevorzugten Ausführungsform weist das Angriffsmittel je sechs Angriffsvorsprünge und Angriffsvertiefungen auf, welche vorzugsweise in Umfangsrichtung gerundet sind. Besonders bevorzugt weist die erfindungsgemässe Schraube also ein Angriffsmittel in Form eines modifizierten Innentorx', auch Innensechsrund genannt, auf. Wichtig ist, dass sich die erfindungsgemässe Schraube mit einem entsprechenden handelsüblichen Drehwerkzeug einschrauben lässt. Diesbezüglich wird auf die oben erwähnte Norm EN DIN ISO 10664 verwiesen. Bei sechs Angriffsvorsprüngen und Angriffsvertiefungen beträgt der Winkelabstand zwischen zwei benachbarten äusseren Scheiteln jeweils 60°, so dass die äusseren Scheitel ein gleichseitiges Hexagon bilden. Dasselbe trifft auch auf den Winkelabstand zwischen zwei benachbarten inneren Scheiteln zu, wobei die inneren Scheitel ebenfalls ein gleichseitiges Hexagon bilden.

In einer bevorzugten Ausführungsform weist die sacklochförmige Ausnehmung zusätzlich ein Innengewinde auf. Ein solches Innengewinde kann zur Verbindung mit einem Abutment oder einem anderen Protheseelement verwendet werden. Das Innengewinde ist vorzugsweise unterhalb des Angriffsmittels und des Hinterschnitts, d.h. näher beim unteren Schraubenende, angeordnet.

In einer bevorzugten Ausführungsform weist die sacklochförmige Ausnehmung zusätzlich einen Innensechskant, insbesondere einen Innensechskant gemäss der Norm EN DIN ISO 10664, auf, welcher unterhalb des oben beschriebenen Angriffsmittels angeordnet ist. Bei einer solchen Verbindungsschraube kann ein Drehwerkzeug sowohl unter einem Winkel γ als auch in der Verlängerung der zentralen Längsachse C der Verbindungsschraube mit dieser lösbar verbunden werden, so dass ein Drehmoment übertragen kann. Falls das Drehwerkzeug gerade, d.h. in der Verlängerung der zentralen Längsachse C, eingeführt wird, gelangt es mit dem unteren Innensechskant in Verbindung; wird das Drehwerkzeug hingegen unter einem Winkel γ eingeführt, so wirkt es mit dem oberen Angriffsmittel zusammen. Dadurch ist die erfindungsgemässe Verbindungs-schraube vielseitiger einsetzbar.

In einer bevorzugten Ausführungsform weist der Schaftabschnitt einen Aussendurchmesser von 1.0 mm bis 2.2 mm, insbesondere von 1.6 mm, auf.

In einer bevorzugten Ausführungsform weist der Kopfabschnitt einen Aussendurchmesser von 1.5 mm bis 3.5 mm, insbesondere von 2.5 mm, auf.

In einer bevorzugten Ausführungsform hat der Schaftabschnitt eine Höhe von 5.0 mm bis 10.0 mm, insbesondere von 7.0 mm.

In einer bevorzugten Ausführungsform hat der Kopfabschnitt eine Höhe von 0.8 mm bis 1.6 mm, insbesondere von 1.2 mm.

Die obigen Masse für Durchmesser und Höhe der Schraubenteile entsprechen den heutzutage typischerweise in bekannten Dentalimplantat-Systemen verwendeten Verbindungsschrauben. Je nach Anwendung der Verbindungsschraube wäre es aber natürlich auch möglich, die Aussendurchmesser und Höhen grösser oder kleiner zu wählen.

In einer bevorzugten Ausführungsform besteht die Verbindungsschraube aus Metall oder Keramik, insbesondere aus Titan, einer Titanlegierung, rostfreiem Stahl oder Zirkonoxid. Diese Materialien sind besonders gut geeignet, da sie einerseits über eine ausreichende Stabilität für die Anwendung im Bereich von Dentalimplantaten verfügen, sich andererseits aber auch problemlos in die gewünschte Form bringen lassen. Zusätzlich können Verbindungsschrauben aus diesen Materialien gut gereinigt und sterilisiert werden, was für eine Anwendung in der Implantologie zur Vermeidung von Infektionen und sonstigen unerwünschten Nebenwirkungen unerlässlich ist.

Vorzugsweise ist die erfindungsgemässe Verbindungsschraube einteilig ausgebildet. Dies erleichtert die Reinigung und Sterilisation der Schraube.

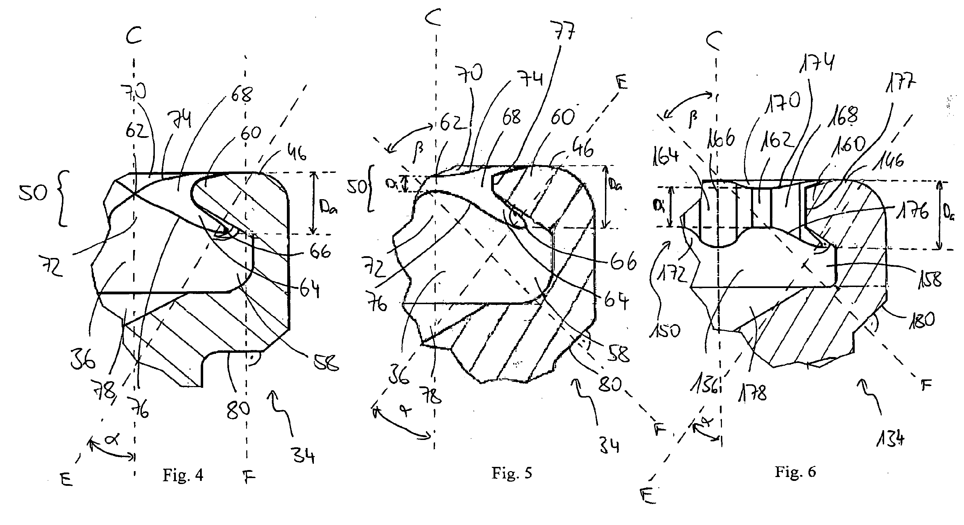

In einer bevorzugten Ausführungsform schliesst eine Flächennormale der Hinterschnittfläche mit der Längsachse C der Verbindungsschraube einen Winkel α von 20° bis 60°, vorzugsweise von 30° bis 50°, ein. Zur Definition dieses Winkels α wird auf die Ausführungen zu den Figuren 4 und 5 weiter unten verwiesen, welche für die gesamte Anmeldung gelten. Durch eine solche relativ steile Ausbildung der Hinterschnittfläche wird das Einführen des Drehwerkzeugs in die Verbindungsschraube erleichtert.

In einer bevorzugten Ausführungsform kann ein handelsüblicher Torx-Schraubenzieher auch dann in das Angriffsmittel der erfindungsgemässen Verbindungsschraube eingeführt werden, wenn die Längsachse der Schraube und diejenige des Schraubenziehers in einem spitzen Winkel zueinander stehen. Insbesondere kann der Schraubenzieher in einem Winkel γ von bis zu 15°, vorzugsweise in einem Winkel γ von bis zu 20°, vorzugsweise bis zu 30°, gegenüber der Längsachse C der Schraube in das Angriffsmittel eingeführt werden. Dies erlaubt selbst in schwierigen Fällen ein problemloses Einführen.

In einer bevorzugten Ausführungsform hat der Kopfabschnitt eine zumindest im Wesentlichen kreiszylinderförmige Aussenform, deren Aussendurchmesser grösser ist als derjenige des Schaftabschnitts, wobei zwischen dem Kopfabschnitt eine ringförmige Schulterfläche verläuft. Durch diese Ausgestaltung wird erreicht, dass die Schraube nur bis zu einer vorbestimmten Tiefe in das Dentalimplantat eingeführt werden kann - nämlich, bis die Schulterfläche auf einer entsprechenden Gegenfläche des Abutments anliegt - und dass Implantat und Abutment sicher miteinander verbunden werden können.

Besonders bevorzugt ist es, dass eine Flächennormale der ringförmigen Schulterfläche mit der Längsachse C der Verbindungsschraube einen Winkel β von 0° bis 45°, insbesondere von etwa 30°, einschliesst. Zur Definition dieses Winkels β wird auf die Ausführungen zu den Figuren 4 und 5 weiter unten verwiesen, welche für die gesamte Anmeldung gelten.

Die erfindungsgemässe Verbindungsschraube kann sowohl einzeln als auch als Set mit weiteren analogen Verbindungsschrauben und/oder einem passenden Drehwerkzeug verkauft werden. Alternativ wäre es auch möglich, die Verbindungsschraube mit einem Dentalimplantat und/oder Abutment zu kombinieren. Zudem kann innerhalb dieser Sets natürlich die Anzahl der einzelnen Komponenten beliebig variiert werden.

Anhand der nachfolgenden Zeichnungen werden drei bevorzugte Ausführungsformen der erfindungsgemässen Verbindungsschraube genauer beschrieben.

Es zeigt rein schematisch:
- Fig. 1a: das Eindrehen einer erfindungsgemässen Verbindungsschraube mittels eines handelsüblichen Drehwerkzeugs;
- Fig. 1b: eine Vergrösserung von Schraubenkopf und Drehwerkzeug aus Figur 1a;
- Fig. 2: eine perspektivische Darstellung einer ersten bevorzugten Ausführungsform einer erfindungsgemässen Verbindungsschraube;
- Fig. 3a: eine perspektivische Darstellung eines handelsüblichen Drehwerkzeugs;
- Fig. 3b: eine Vergrösserung der Spitze des Drehwerkzeugs aus Figur 3a;
- Fig. 4: einen Schnitt durch den Kopfabschnitt der ersten bevorzugten Ausführungsform einer erfindungsgemässen Verbindungsschraube;
- Fig. 5: einen Schnitt durch den Kopfabschnitt einer zweiten bevorzugten Ausführungsform einer erfindungsgemässen Verbindungsschraube;
- Fig. 6: einen Schnitt durch den Kopfabschnitt einer Verbindungsschraube mit einem Standard-Innentorx gemäss dem Stand der Technik;
- Fig. 7: eine Draufsicht auf das obere Ende der Verbindungsschraube aus Figur 4;
- Fig. 8: eine Vergrösserung des Angriffsmittels der Verbindungsschraube aus Figur 4;
- Fig. 9 a-d: je einen Schnitt durch den Kopfabschnitt einer erfindungsgemässen Verbindungsschraube, welche mit einem Drehwerkzeug verbunden ist; und
- Fig. 10: einen Schnitt durch den Kopfabschnitt einer dritten bevorzugten Ausführungsform einer erfindungsgemässen Verbindungsschraube.

Figur 1a zeigt einen Ausschnitt aus einem Oberkiefer 10 eines Patienten mit einem Kieferknochen 12, einem den Kieferknochen 12 umgebenden Weichgewebe 14, mehreren verbliebenen natürlichen Zähnen 16, sowie einem künstlichen Zahnersatz, bestehend aus einem Dentalimplantat 18 und einer Zahnkrone 20. Die Zahnkrone 20 wird mittels einer erfindungsgemässen Verbindungsschraube 22 mit dem Dentalimplantat 18 verbunden. Dazu wird mithilfe eines handelsüblichen Drehwerkzeugs 24 ein Drehmoment M auf die Verbindungsschraube 22 übertragen und diese so in das Dentalimplantat 18 eingeschraubt. Die nachfolgenden Ausführungen gelten natürlich analog auch für einen Unterkiefer.

Bei dem gezeigten Dentalimplantat 18 handelt es sich um ein einteiliges, sogenanntes "Bone-Level-Implantat", welches praktisch vollständig im Kieferknochen 12 des Patienten versenkt wird. Das Dentalimplantat 18 ist im Wesentlichen kreiszylinderförmig, besteht typischerweise aus Metall, z.B. Titan oder einer Titanlegierung, oder Keramik, z.B. Zirkonoxid, und weist ein Aussengewinde zur Verankerung im Kieferknochen 12 auf. Zudem weist das Dentalimplantat 18 einen im Wesentlichen kreiszylinderförmigen Hohlraum 26 mit einem Innengewinde auf, welcher parallel zu einer zentralen Längsachse des Dentalimplantats 18 verläuft und in welchen die Verbindungsschraube 22 eingeschraubt werden kann. Die Ausrichtung bzw. Neigung des Dentalimplantats 18, und damit auch der zentralen Längsachse, wird im Wesentlichen durch den Kieferknochen 22 und die Lage der umliegenden natürlichen (oder künstlichen) Zähne 16 bestimmt.

Die Zahnkrone 20, welche typischerweise aus Keramik besteht, ragt aus dem Weichgewebe 14 in die Mundhöhle des Patienten hinein. Alternativ wäre es auch möglich, dass das Dentalimplantat 18 mit einem Abutment (nicht gezeigt) verbunden wird, auf welches wiederum die Zahnkrone 20 aufgesetzt wird. Die Zahnkrone 20 weist eine durchgehende zylinderförmige Bohrung 28 mit einer Austrittsöffnung 30 auf, durch welche die Verbindungsschraube 22 eingeführt werden kann. Damit die Austrittsöffnung 30 von ausserhalb der Mundhöhle nicht sichtbar ist, ist sie auf der inneren, d.h. der lingualen bzw. palatalen, Seite der Zahnkrone 20 angeordnet.

Beim in Figur 1a gezeigten Zahnersatz stehen der Hohlraum 26 im Dentalimplantat 18 und die Bohrung 28 in der Zahnkrone 20 in einem spitzen Winkel γ zueinander. Das bedeutet, dass eine zentrale Längsachse D des Drehwerkzeugs 24 ebenfalls um den Winkel γ gegenüber der zentralen Längsachse des Dentalimplantats 18 geneigt sein muss, während das Drehwerkzeug 24 in die Verbindungsschraube 22 eingeführt wird bzw. mit dieser in Eingriff steht für die Übertragung des Drehmoments M. Dieser Winkel γ kann bis zu 20°, vorzugsweise bis zu 30°, betragen.

Die erfindungsgemässe Verbindungsschraube 22 umfasst einen Schaftabschnitt 32 und einen Kopfabschnitt 34. Der Schaftabschnitt 32 weist ein Aussengewinde zur Verbindung mit dem Dentalimplantat 18 auf. Der Kopfabschnitt 213 weist eine sacklochförmige Ausnehmung 36 auf, in welche das Drehwerkzeug 24 zur lösbaren Verbindung mit der Verbindungsschraube 22 eingeführt werden kann. Die Verbindungsschraube 22 wird derart in den Hohlraum 26 des Dentalimplantats 18 eingeführt, dass ihre zentrale Längsachse C mit der zentralen Längsachse des Dentalimplantats zusammenfällt.

Bei dem in Figur 1a gezeigten Drehwerkzeug 24 handelt es sich um einen handelsüblichen Schraubenzieher mit einem Aussentorx. Das Drehwerkzeug 24 umfasst einen Griffteil 38, welcher von einem Anwender mit den Fingern gehalten werden kann, und einen daran anschliessenden Wirkteil 40 mit einer Spitze 42. Die Spitze 42 dient zum temporären Eingreifen in und zur Übertragung eines Drehmoments M auf die Verbindungsschraube 22. Dazu wird die Spitze 42 in die sacklochförmige Ausnehmung 36 der Verbindungsschraube 22 eingeführt.

Figur 1b zeigt einen vergrösserten Ausschnitt aus Figur 1a, bei welchem die lösbare Verbindung zwischen der Verbindungsschraube 22 und dem Drehwerkzeug 24 dargestellt ist. Auch hier sieht man deutlich, dass die zentrale Längsachse von Dentalimplantat 18 und Verbindungsschraube 22 gegenüber der zentralen Längsachse D des Drehwerkzeugs um einen spitzen Winkel γ geneigt ist. Durch die erfindungsgemässe Ausgestaltung der Verbindungsschraube 22 ist trotz dieser Neigung die problemlose Übertragung des Drehmoments M gewährleistet.

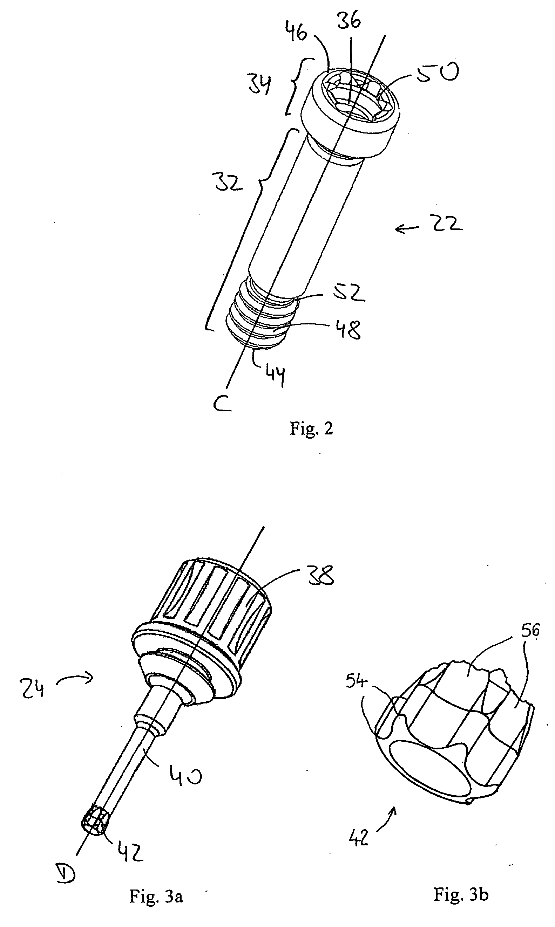

Figur 2 zeigt eine perspektivische Darstellung einer ersten bevorzugten Ausführungsform der erfindungsgemässen Verbindungsschraube 22. Diese umfasst einen Schaftabschnitt 32 mit einem unteren Schraubenende 44 und einen Kopfabschnitt 34 mit einem oberen Schraubenende 46 und besteht vorzugsweise aus Metall oder Keramik, insbesondere aus Titan, einer Titanlegierung, rostfreiem Stahl oder Zirkonoxid. Besonders bevorzugt ist es, dass die Verbindungsschraube 22 einteilig ausgebildet ist. Der Schaftabschnitt 32 weist ein Aussengewinde 48 zur Verbindung mit dem Dentalimplantat 18 (hier nicht gezeigt) auf. Der Kopfabschnitt 34 umfasst eine zum oberen Schraubenende 46 hin offene, sacklochförmige Ausnehmung 36, in welcher ein Angriffsmittel 50 für das Drehwerkzeug 24 (hier nicht gezeigt) angeformt ist.

Bei der in Figur 2 gezeigten Verbindungsschraube 22 sind sowohl der Schaftabschnitt 32 als auch der Kopfabschnitt 34 im Wesentlichen kreiszylinderförmig ausgebildet. Der Schaftabschnitt 32 ist schmaler aber deutlich höher als der Kopfabschnitt 34. Oberhalb des Aussengewindes 48 weist der Schaftabschnitt 32 eine um laufende Nut 52 auf.

Die Figur 3a und 3b zeigen ein handelsübliches Drehwerkzeug 24, wie es heute typischerweise zum Einschrauben einer Verbindungsschraube 22 (hier nicht gezeigt) in ein Dentalimplantat 18 (hier nicht gezeigt) eingesetzt wird. Dieses Drehwerkzeug 24 umfasst einen Griffteil 38 und einen daran anschliessenden Wirkteil 40 mit einer Spitze 42. Die Spitze 42, welche in Figur 3b vergrössert dargestellt ist, dient zum temporären Eingreifen in und zur Übertragung eines Drehmoments auf die Verbindungsschraube 22. Dazu weist die gezeigte Spitze 42 sechs in Umfangsrichtung gleichmässig verteilte, radial nach aussen gerichtete, in Umfangsrichtung gerundete Vorsprünge 54 auf und dazwischen jeweils eine radial nach innen gerichtete, in Umfangsrichtung ebenfalls gerundete Vertiefung 56. Diese Vorsprünge 54 und Vertiefungen 56 sind dazu bestimmt, mit dem Angriffsmittel 50 der Verbindungsschraube 22 (hier nicht gezeigt) zusammen zu wirken. Das in den Figuren 3a und 3b gezeigte Drehwerkzeug 24 weist also einen Aussentorx oder Aussensechsrund auf. Alternativ wäre es auch möglich, je nach Ausgestaltung des Angriffsmittels 50 der Verbindungsschraube 22, ein anderes darauf abgestimmtes handelsübliches Drehwerkzeug zu verwenden.

Die Figuren 4 und 5 zeigen je einen Schnitt durch den Kopfabschnitt 34 einer erfindungsgemässen Verbindungsschraube 22, während Figur 6 Schnitt durch den Kopfabschnitt 134 einer Schraube mit einem Standard-Innentorx zeigt. Zur Unterscheidung sind im Folgenden die Komponenten beim Standard-Innentorx jeweils mit einem 100er-Referenzzeichen versehen, während bei der erfindungsgemässen Verbindungsschraube 22 die obigen Nummerierungen fortgesetzt werden.

Alle drei Kopfabschnitte 34, 134 weisen eine zum oberen Schraubenende 46, 146 hin offene, sacklochförmige Ausnehmung 36, 136 mit einem darin angeformten Angriffsmittel 50, 150 für ein Drehwerkzeug auf. Unterhalb des Angriffsmittels 50, 150 weitet sich die sacklochförmige Ausnehmung 36, 136 auf und bildet einen Hinterschnitt 58, 158.

Die Angriffsmittel 50, 150 umfassen mehrere - im abgebildeten Fall jeweils sechs - in radialer Richtung gegen innen gerichtete, gerundete Angriffsvorsprünge 60, 160. Jeder dieser Angriffsvorsprünge 60, 160 weist einen inneren Scheitel 62, 162 auf. Beim Standard-Innentorx gemäss Figur 6 und der Ausführungsform gemäss Figur 5 ist dieser innere Scheitel 62, 162 als Scheitellinie oder Scheitelfläche ausgestaltet, während der innere Scheitel 60 bei der Ausführungsform gemäss Figur 4 punktförmig oder zumindest annähernd punktförmig ist. In Umfangsrichtung jeweils mittig wischen den Angriffsvorsprüngen 60, 160 befindet jeweils eine in radialer Richtung nach aussen gerichtete, gerundete Angriffsvertiefung 64, 164, welche je einen äusseren Scheitel 66, 166 aufweist. Die äusseren Scheitel 66, 166 sind in allen drei Fällen als Scheitellinien ausgebildet.

Ein weiterer Unterschied besteht darin, das sich beim Standard-Innentorx und der Ausführungsform gemäss Figur 5 über die Angriffsvorsprünge 60, 160 und Angriffsvertiefungen 64, 164 eine einzelne, zusammenhängende und im Wesentlichen parallel zur Längsachse C der Schraube in Umfangsrichtung verlaufende Antriebsfläche 68, 168 erstreckt, während die Antriebsfläche 68 bei der gezeigten Ausführungsform gemäss Figur 4 in mehrere - im abgebildeten Fall sechs - getrennte Abschnitte unterteilt ist, welche sich an den inneren Scheitelpunkten 62 berühren. Bei der erfindungsgemässen Ausführungsform gemäss Figur 5 verschmälert sich die Antriebsfläche 68 im Bereich der inneren Scheitel 62 aber deutlich stärker, als dies bei der Antriebsfläche 168 der handelsüblichen Schraube gemäss Figur 6 der Fall ist.

Die Antriebsflächen 68, 168 sind in axialer Richtung auf der einen Seite durch eine obere, radial nach innen abfallende Stirnfläche 70, 170 und auf der anderen Seite durch eine untere, vom Hinterschnitt 58, 158 aus radial nach innen ansteigende Hinterschnittfläche 72, 172 begrenzt. Zwischen der Stirnfläche 70, 170 und der mindestens einen Antriebsfläche 68, 168 verläuft eine obere Grenzlinie 74, 174, und zwischen der Hinterschnittfläche 72, 172 und der mindestens einen Antriebsfläche 68, 168 verläuft eine untere Grenzlinie 76, 176.

Beim Standard-Innentorx gemäss Figur 6 und er Ausführungsform gemäss Figur 5 sind die obere Grenzlinie 74, 174 und die untere Grenzlinie 76, 176 über den gesamten Umfang voneinander beabstandet. Bei der besonders bevorzugten Ausführungsform gemäss Figur 4 hingegen sind die obere Grenzlinie 74 und die untere Grenzlinie 174 im Bereich der äusseren Scheitel 66 voneinander beabstandet, während sie sich im Bereich der inneren Scheitel 62 berühren. Bei der Ausführungsform gemäss Figur 4 bilden die obere Grenzlinie 74 und die untere Grenzlinie 76 auf den Angriffsvorsprüngen 60 also jeweils einen Scheitelpunkt. An diesen Stellen treffen jeweils die Stirnfläche 70, die Hinterschnittfläche 72 sowie je zwei benachbarte Teile der Antriebsfläche 68 aufeinander und bilden einen Pyramidenspitz-förmigen, zur zentralen Längsachse der Verbindungsschraube 22 hin gerichteten Vorsprung.

Bei den Figuren 5 und 6 ist jeweils eine Verbindungslinie 77, 177 auf der Oberfläche des Angriffsmittels 50, 150 zwischen der oberen Grenzlinie 74, 174 und der unteren Grenzlinie 76, 176 sichtbar, welche in beiden Fällen die Form einer Geraden hat. Bei einer in den Figuren nicht gezeigten bevorzugten Ausführungsform dagegen ist diese Verbindungslinie 77 zwischen der oberen Grenzlinie 74 und der unteren Grenzlinie 76 am inneren Scheitel 62 zur zentralen Längsachse C der Verbindungsschraube 22 hin gewölbt, d.h. gerundet.

Im Bereich der äusseren Scheitel 66, 166 sind die obere Grenzlinie 74, 174 und die untere Grenzlinie 76, 176 um einen äusseren Abstand Dₐ voneinander beabstandet. Im Bereich der inneren Scheitel 62, 162 sind die obere Grenzlinie 74, 174 und die untere Grenzlinie 76, 176 um einen inneren Abstand Dᵢ voneinander beabstandet, wobei Dᵢ bei der erfindungsgemässen Verbindungsschraube auch 0 sein kann (in Figur 4 gezeigt).

Bei den beiden erfindungsgemässen Ausführungsformen gemäss den Figuren 4 und 5 beträgt das Verhältnis Dᵢ/Dₐ höchstens 0.5. Bei der in Figur 6 gezeigten Schraube aus dem Stand der Technik hingegen ist das Verhältnis Dᵢ/Dₐ deutlich grösser.

Durch diese Ausgestaltung der erfindungsgemässen Verbindungsschraube 22 wird erreicht, dass das handelsübliche Drehwerkzeug 24 aus den Figuren 3a und 3b auch dann mit dem Angriffsmittel 50 lösbar verbunden und zur Übertragung eines Drehmoments genutzt werden kann, wenn die Längsachse C der Verbindungsschraube 22 in einem spitzen Winkel γ zur Längsachse D des Drehwerkzeugs 24 steht. So wird die Spitze 42 des Drehwerkzeugs 24 in die sacklochförmige Ausnehmung 36 im Kopfabschnitt 34 der Verbindungsschraube 22 eingeführt und wirkt mit dem Angriffsmittel 55 zusammen. Dabei greifen die Vorsprünge 54 am Drehwerkzeug 24 in die Angriffsvertiefungen 64 der Verbindungsschraube 22 ein, während die Angriffsvorsprünge 60 der Verbindungsschraube 22 in die Vertiefungen 56 des Drehwerkzeugs 24 eingreifen. Dadurch ist eine effiziente Drehmomentübertragung vom Drehwerkzeug 24 auf die Verbindungsschraube 22 möglich.

Diese Wirkverbindung zwischen der Spitze 42 des Drehwerkzeugs 24 und dem Angriffsmittel 50 der erfindungsgemässen Verbindungsschraube 22 ist selbst dann möglich, wenn, wie in den Figuren 1a und 1b gezeigt, die Längsachse D des Drehwerkzeugs 24 in einem spitzen Winkel γ von bis zu 20°, vorzugsweise bis zu 30°, relativ zur Längsachse C der Verbindungsschraube 22 steht. Zudem erlaubt die erfindungsgemässe Verbindungsschraube 22 dank der speziellen Ausgestaltung des Angriffsmittels 50 ein Einführen und Herausziehen der Spitze 42 des Drehwerkzeugs 24 in das bzw. aus dem Angriffsmittel 50 auch bei einem spitzen Winkel von bis zu 20°, vorzugsweise bis zu 30°, zwischen den beiden Längsachsen D, C von Drehwerkzeug 24 und Verbindungsschraube 22.

Unterhalb des Angriffsmittels 50, 150 weitet sich die sacklochförmige Ausnehmung zu einem Hinterschnitt 58, 158. Dieser ist in allen drei Fällen im Wesentlichen kreiszylinderförmig und wird nach oben hin durch die Hinterschnittfläche 72, 172 begrenzt. Wie oben ausgeführt, steigt die Hinterschnittfläche 72, 172 vom Hinterschnitt 58, 158 aus nach Innen an, ist also gegenüber der Längsachse C der Verbindungsschraube 22 geneigt. Dabei schliesst eine Flächennormale E zur Hinterschnittfläche 72, 172 mit der Längsachse C einen Winkel α von 20° bis 60°, vorzugsweise von 30° bis 50°, ein.

An den Hinterschnitt 58, 158 wiederum schliesst sich in Richtung zum unteren Schraubenende hin (hier nicht sichtbar) ein sich konisch verjüngender Übergangsbereich 78, 178 an, der schliesslich in einen Befestigungsbereich (nicht sichtbar) zur Befestigung eines Abutments oder einer Zahnkrone übergeht.

Der Kopfabschnitt 34, 134 bei den in den Figuren 4, 5 und 6 gezeigten Schrauben hat eine im Wesentlichen kreiszylinderförmige Aussenform. Der Aussendurchmesser des Kopfabschnitts 34, 134 ist grösser als derjenige des angrenzenden Schaftabschnitts 32, 132, wobei zwischen dem Kopfabschnitt 34, 134 und dem Schaftabschnitt 32, 132 eine ringförmige Schulterfläche 80, 180 verläuft.

Bei der in Figur 4 gezeigten Ausführungsform steht eine Flächennormale F zur ringförmigen Schulterfläche 80 im Wesentlichen parallel zur Längsachse C der Verbindungsschraube 22, schliesst mit dieser also einen Winkel β von 0° ein. Bei der in Figur 5 gezeigten Ausführungsform schliesst die Flächennormale F zur ringförmigen Schulterfläche 80 mit der Längsachse C der Verbindungsschraube 22 einen spitzen Winkel β von ungefähr 30° ein.

Nebst den in den Figuren 4 und 5 gezeigten Schulterflächen 80 sind aber auch sämtliche Kombinationen von mehreren Schulterflächen mit gleicher oder unterschiedlicher Neigung denkbar, die einen Übergang vom breiteren Kopfabschnitt 34 zum schmaleren Schaftabschnitt 32 ermöglichen. Die Schulterfläche 80 ist dazu bestimmt, im zusammengesetzten Zustand auf einer entsprechenden Gegenfläche im Abutment bzw. der Krone aufzuliegen (nicht gezeigt) und so die Verbindung zu stabilisieren und gleichzeitig zu verhindern, dass die Verbindungsschraube 22 zu tief eingeführt wird.

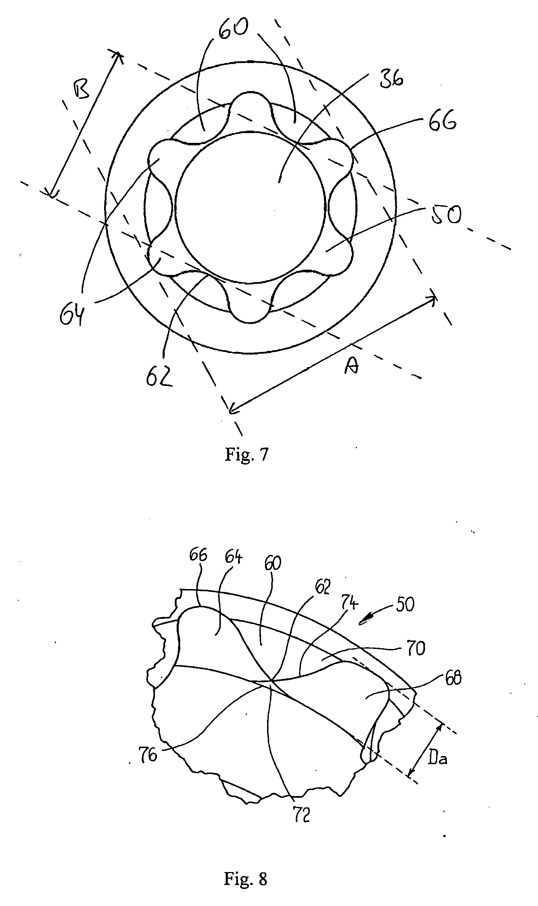

Figur 7 zeigt eine Draufsicht auf die Verbindungsschraube 22 aus der Figur 4. Das in der sacklochförmigen Ausnehmung 36 angeformte Angriffsmittel 50 weist sechs in radialer Richtung nach innen gerichtete und in Umfangsrichtung gleichmässig verteilte, gerundete Angriffsvorsprünge 60 mit je einem inneren Scheitel 62 und dazwischen je mittig eine in radialer Richtung nach aussen gerichtete, gerundete Angriffsvertiefung 64 mit je einem äusseren Scheitel 66 auf. Der Abstand zwischen zwei sich diametral gegenüberliegenden äusseren Scheiteln 66 wird als A bezeichnet, während der Abstand zwischen zwei sich diametral gegenüberliegenden inneren Scheiteln 62 als B bezeichnet wird. Vorzugsweise beträgt das Verhältnis A/B bei der erfindungsgemässen Verbindungsschraube 22 mindestens 1.4.

Figur 8 zeigt eine vergrösserte, perspektivische Darstellung eines Ausschnitts des Angriffsmittels 50 in der sacklochförmigen Ausnehmung 36 der erfindungsgemässen Verbindungsschraube 22 gemäss Figur 4. Darin ist ein Teil der Angriffsvorsprünge 60 mit je einem inneren Scheitel 62 und der Angriffsvertiefungen 64 mit je einem äusseren Scheitel 66 zu sehen. Über diese erstrecken sich die Angriffsflächen 68, welche nach oben hin durch die obere Grenzlinie 74 von der Stirnfläche 70 und nach unten hin durch die untere Grenzlinie 76 von der Hinterschnittfläche 72 getrennt sind. Im Bereich der äusseren Scheitel 66 verlaufen die obere Grenzlinie 74 und die untere Grenzlinie 76 nahezu parallel zueinander und sind voneinander um den äusseren Abstand Dₐ beabstandet, während sie sich zu den inneren Scheiteln 62 hin immer mehr annähern und sich am Scheitel 62 schliesslich berühren.

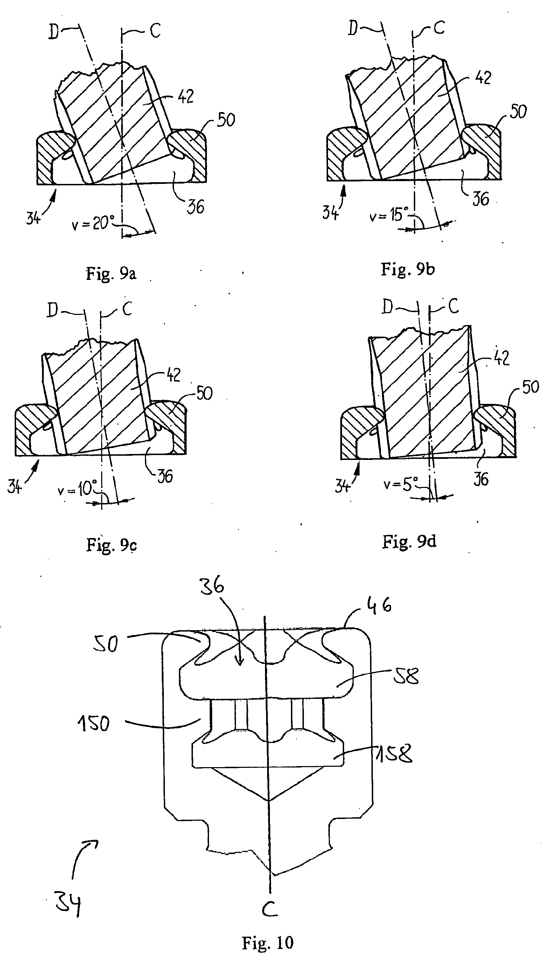

Die Figuren 9a bis 9d zeigen je einen Schnitt durch den oberen Teil des Kopfabschnitts 34 einer erfindungsgemässen Verbindungsschraube 22, wobei jeweils eine Spitze 42 eines handelsüblichen Drehwerkzeugs 24 in die sacklochförmige Vertiefung 36 eingeführt ist und dort mit dem Angriffsmittel 50 zusammenwirkt. Die Figuren 9a bis 9d unterscheiden sich jeweils im Winkel γ zwischen der zentralen Längsachse C der Verbindungsschraube 22 und der Längsachse D des Drehwerkzeugs 24, d.h. das Drehwerkzeug 24 ist jeweils unter einem anderen spitzen Winkel γ in die Verbindungsschraube 22 eingeführt. Figur 9a zeigt einen Winkel γ von 20°, Figur 9b einen Winkel γ von 15°, Figur 9c einen Winkel γ von 10° und Figur 9d einen Winkel γ von 5°. In allen vier Fällen wird zwischen dem Angriffsmittel 50 und der Spitze 42 eine lösbare, aber drehsichere Verbindung zur Übertragung eines Drehmoments M vom Drehwerkzeug 24 auf die Verbindungsschraube 22 gebildet.

Figur 10 zeigt einen Schnitt durch den Kopfabschnitt 34 einer dritten bevorzugten Ausführungsform einer erfindungsgemässen Verbindungsschraube 22. Der Kopfabschnitt 34 weist ebenfalls eine zum oberen Schraubenende 46 hin offene, sacklochförmige Ausnehmung 36 auf. Im oberen, dem oberen Schraubenende 46 zugewandten Bereich ist in der sacklochförmigen Ausnehmung 36 ein erstes Angriffsmittel 50 angeformt, welches demjenigen der in Figur 4 gezeigten Ausführungsform entspricht. Alternativ wäre es auch möglich, dass das erste Angriffsmittel 50 demjenigen der in Figur 5 gezeigten Ausführungsform entspricht, wobei die Verbindungslinie 77 eine Gerade (wie in Figur 5 gezeigt) oder eine zur zentralen Längsachse C hin gewölbte Kurve sein kann. Unterhalb des Angriffsmittels 50 weitet sich die sacklochförmige Ausnehmung 36 zu einem ersten Hinterschnitt 58 auf.

Zusätzlich ist im unteren, dem unteren Schraubenende 44 (nicht sichtbar) zugewandten Bereich der sacklochförmigen Ausnehmung 36 ein zweites Angriffsmittel 150 in Form eines Innensechskants, insbesondere ein Innensechskant gemäss der Norm EN DIN ISO 10664, angeformt. Ein analoges Angriffsmittel 150 ist auch in Figur 6 dargestellt und detailliert beschrieben. Unterhalb des zweiten Angriffsmittels 150 weitet sich die sacklochförmige Ausnehmung 36 ebenfalls auf und bildet einen zweiten Hinterschnitt 158.

Durch diese Ausgestaltung kann ein Drehwerkzeug 24 sowohl in der Verlängerung der zentralen Längsachse C der Verbindungsschraube 22 eingeführt und mit dieser lösbar verbunden werden, wobei das Drehwerkzeug 24 zur Übertragung eines Drehmoments M mit dem zweiten Angriffsmittel 150 zusammenwirkt, als auch unter einem Winkel γ, wobei das Drehwerkzeug 24 mit dem ersten Angriffsmittel 50 zusammenwirkt.

## Patentansprüche

1. Verbindungsschraube (22) für ein Dentalimplantat (18), umfassend einen Schaftabschnitt (32) mit einem unteren Schraubenende (44) und einen Kopfabschnitt (34) mit einem dem unteren Schraubenende (44) gegenüberliegenden oberen Schraubenende (46), welche entlang einer zentralen Längsachse C der Verbindungsschraube (22) angeordnet sind,
wobei der Schaftabschnitt (32) ein Aussengewinde (48) zur Verbindung mit dem Dentalimplantat (18) und der Kopfabschnitt (34) eine zum oberen Schraubenende (46) hin offene, sacklochförmige Ausnehmung (36) aufweist, in welcher ein Angriffsmittel (50) für ein Drehwerkzeug (24) angeformt ist,
wobei sich die sacklochförmige Ausnehmung (36) unterhalb des Angriffsmittels (50) zum unteren Schraubenende (44) hin radial aufweitet und einen Hinterschnitt (58) bildet,
wobei das Angriffsmittel (50) mehrere in radialer Richtung gegen innen gerichtete und in Umfangsrichtung gleichmässig verteilte Angriffsvorsprünge (60) mit je einem inneren Scheitel (62) und jeweils mittig zwischen zwei benachbarten Angriffsvorsprüngen (60) je eine in radialer Richtung nach aussen gerichtete Angriffsvertiefung (64) mit je einem äusseren Scheitel (66) aufweist,
wobei jeweils zwei sich diametral gegenüberliegende äussere Scheitel (66) einen ersten Abstand A voneinander haben und jeweils zwei sich diametral gegenüberliegende innere Scheitel (62) einen zweiten Abstand B voneinander haben,
wobei sich über die Angriffsvorsprünge (60) und Angriffsvertiefungen (64) mindestens eine Antriebsfläche (68) erstreckt, welche durch eine obere, radial nach innen in Richtung zum unteren Schraubenende (44) hin abfallende Stirnfläche (70) und eine untere, vom Hinterschnitt (58) radial nach innen zum oberen Schraubenende (46) hin ansteigende Hinterschnittfläche (72) begrenzt wird, und zwischen der Stirnfläche (70) und der mindestens einen Antriebsfläche (68) eine obere Grenzlinie (74) und zwischen der Hinterschnittfläche (72) und der mindestens einen Antriebsfläche (68) eine untere Grenzlinie (76) verläuft, und
wobei die obere Grenzlinie (74) und die untere Grenzlinie (76) im Bereich der äusseren Scheitel (66) der Angriffsvertiefungen (64) um einen äusseren Abstand Dₐ voneinander beabstandet sind,
**dadurch gekennzeichnet, dass**
das Verhältnis Dᵢ/Dₐ von einem inneren Abstand Dᵢ zwischen der oberen Grenzlinie (74) und der unteren Grenzlinie (76) im Bereich der inneren Scheitel (62) der Angriffsvorsprünge (60) zum äusseren Abstand Dₐ kleiner als 0.5 ist.

2. Verbindungsschraube (22) nach Anspruch 1, **dadurch gekennzeichnet, dass** das Verhältnis Dᵢ/Dₐ kleiner als 0.3, vorzugsweise kleiner als 0.2 und besonders bevorzugt kleiner als 0.1 ist.

3. Verbindungsschraube (22) nach Anspruch 1 oder 2, **dadurch gekennzeichnet, dass** sich die untere Grenzlinie (76) und die obere Grenzlinie (74) im Bereich der inneren Scheitel (62) der Angriffsvorsprünge (60) berühren.

4. Verbindungsschraube (22) nach einem der Ansprüche 1 bis 3, **dadurch gekennzeichnet, dass** der innere Abstand Dᵢ weniger als 0.1 mm, vorzugsweise weniger als 0.05 mm, und insbesondere 0.0 mm beträgt.

5. Verbindungsschraube (22) nach einem der Ansprüche 1 bis 4, **dadurch gekennzeichnet, dass** der äussere Abstand Dₐ zwischen 0.3 mm und 0.8 mm, vorzugsweise zwischen 0.3 mm und 0.6 mm, und insbesondere 0.4 mm, beträgt.

6. Verbindungsschraube (22) nach einem der Ansprüche 1 bis 5, **dadurch gekennzeichnet, dass** eine Verbindungslinie (77) zwischen der oberen Grenzlinie (74) und der unteren Grenzlinie (76) am inneren Scheitel (62) zur zentralen Längsachse C der Verbindungsschraube (22) hin gewölbt ist.

7. Verbindungsschraube (22) nach einem der Ansprüche 1 bis 6, **dadurch gekennzeichnet, dass** das Verhältnis A/B grösser als 1.4, vorzugsweise grösser als 1.45 ist, und insbesondere etwa 1.5 beträgt.

8. Verbindungsschraube (22) nach einem der Ansprüche 1 bis 7, **dadurch gekennzeichnet, dass** der erste Abstand A 1.8 mm bis 2.0 mm, insbesondere 1.9 mm, beträgt.

9. Verbindungsschraube (22) nach einem der Ansprüche 1 bis 8, **dadurch gekennzeichnet, dass** der zweite Abstand B 1.2 mm bis 1.4 mm, insbesondere 1.3 mm, beträgt.

10. Verbindungsschraube (22) nach einem der Ansprüche 1 bis 9, **dadurch gekennzeichnet, dass** das Angriffsmittel (50) je sechs Angriffsvorsprünge (60) und sechs Angriffsvertiefungen (64) aufweist, welche vorzugsweise in Umfangsrichtung gerundet sind.

11. Verbindungsschraube (22) nach einem der Ansprüche 1 bis 10, **dadurch gekennzeichnet, dass** die sacklochförmige Ausnehmung (36) zusätzlich einen Innensechskant, insbesondere einen Innensechskant gemäss der Norm EN DIN ISO 10664, aufweist, welcher unterhalb des Angriffsmittels (50) angeordnet ist.

12. Verbindungsschraube (22) nach einem der Ansprüche 1 bis 11, **dadurch gekennzeichnet, dass** die Verbindungsschraube (22) aus Metall oder Keramik, insbesondere aus Titan, einer Titanlegierung, rostfreiem Stahl oder Zirkonoxid, besteht.

13. Verbindungsschraube (22) nach einem der Ansprüche 1 bis 12, **dadurch gekennzeichnet, dass** die Verbindungsschraube (22) einteilig ist.

14. Verbindungsschraube (22) nach einem der Ansprüche 1 bis 13, **dadurch gekennzeichnet, dass** eine Flächennormale E der Hinterschnittfläche (72) mit der Längsachse C der Verbindungsschraube (22) einen Winkel α von 20° bis 60°, vorzugsweise von 30° bis 50°, einschliesst.

15. Verbindungsschraube (22) nach einem der Ansprüche 1 bis 14, **dadurch gekennzeichnet, dass** ein handelsüblicher Torx-Schraubenzieher in einem Winkel γ von bis zu 20°, vorzugsweise in einem Winkel γ von bis zu 30°, gegenüber der Längsachse C der Verbindungsschraube (22) in das Angriffsmittel (50) eingeführt werden kann.

16. Verbindungsschraube (22) nach einem der Ansprüche 1 bis 15, **dadurch gekennzeichnet, dass** der Kopfabschnitt (34) eine im Wesentlichen kreiszylinderförmige Aussenform hat, deren Aussendurchmesser grösser ist als derjenige des Schaftabschnitts (32), wobei zwischen dem Kopfabschnitt (34) und dem Schaftabschnitt (32) eine ringförmige Schulterfläche (80) verläuft, wobei eine Flächennormale F der ringförmigen Schulterfläche (80) mit der Längsachse C der Verbindungsschraube (22) einen Winkel β von vorzugsweise 0° bis 45°, insbesondere von etwa 30°, einschliesst.

## Claims

1. A connecting screw (22) for a dental implant (18), comprising a shaft portion (32) having a lower screw end (44) and a head portion (34) having an upper screw end (46) located opposite the lower screw end (44), said portions being arranged along a central longitudinal axis C of the connecting screw (22),
the shaft portion (32) having an outer thread (48) for connection to the dental implant (18) and the head portion (34) having a blind-bore-shaped recess (36), which is open toward the upper screw end (46) and in which an engagement means (50) for a rotary tool (24) is integrally formed,
the blind-bore-shaped recess (36) expanding radially below the engagement means (50) toward the lower screw end (44) and forming an undercut (58),
the engagement means (50) having a plurality of engagement protrusions (60) directed inwardly in the radial direction and distributed uniformly in the circumferential direction, each with an inner apex (62), and, centrally between each two adjacent engagement protrusions (60), having an engagement depression (64) directed outwardly in the radial direction and with an outer apex (66) in each case,
each two diametrically opposed outer apices (66) being arranged at a first distance A from one another and each two diametrically opposed inner apices (62) being arranged at a second distance B from one another,
at least one driving surface (68), which is defined by an upper end face (70) falling radially inwardly in the direction of the lower screw end (44) and by a lower undercut surface (72) rising radially inwardly from the undercut (58) to the upper screw end (46), extending over the engagement protrusions (60) and engagement depressions (64), and an upper borderline (74) running between the end face (70) and the at least one driving surface (68), and a lower borderline (76) running between the undercut surface (72) and the at least one driving surface (68), and
the upper borderline (74) and the lower borderline (76) being distanced from one another in the region of the outer apices (66) of the engagement depressions (64) by an outer distance Dₐ,
wherein
the ratio Dᵢ:Dₐ of an inner distance Dᵢ between the upper borderline (74) and the lower borderline (76) in the region of the inner apices (62) of the engagement protrusions (60) to the outer distance Dₐ is less than 0.5.

2. The connecting screw (22) as claimed in claim 1, wherein the ratio Dᵢ:Dₐ is less than 0.3, preferably less than 0.2 and more preferably less than 0.1.

3. The connecting screw (22) as claimed in claim 1 or 2, wherein the lower borderline (76) and the upper borderline (74) contact one another in the region of the inner apices (62) of the engagement protrusions (60).

4. The connecting screw (22) as claimed in one of claims 1 to 3, wherein the inner distance Dᵢ is less than 0.1 mm, preferably less than 0.05 mm, and in particular is 0.0 mm.

5. The connecting screw (22) as claimed in one of claims 1 to 4, wherein the outer distance Dₐ is between 0.3 mm and 0.8 mm, preferably between 0.3 mm and 0.6 mm, and in particular is 0.4 mm.

6. The connecting screw (22) as claimed in one of claims 1 to 5, wherein a connecting line (77) between the upper borderline (74) and the lower borderline (76) is curved at the inner apex (62) toward the central longitudinal axis C of the connecting screw (22).

7. The connecting screw (22) as claimed in one of claims 1 to 6, wherein the ratio A:B is greater than 1.4, preferably greater than 1.45, and in particular is approximately 1.5.

8. The connecting screw (22) as claimed in one of claims 1 to 7, wherein the first distance A is 1.8 mm to 2.0 mm, and in particular is 1.9 mm.

9. The connecting screw (22) as claimed in one of claims 1 to 8, wherein the second distance B is 1.2 mm to 1.4 mm, and in particular is 1.3 mm.

10. The connecting screw (22) as claimed in one of claims 1 to 9, wherein the engagement means (50) has six engagement protrusions (60) and six engagement depressions (64), which are preferably rounded in the circumferential direction.

11. The connecting screw (22) as claimed in one of claims 1 to 10, wherein the blind-bore-shaped recess (36) additionally has an internal hexagon, in particular an internal hexagon according to standard EN DIN ISO 10664, which is arranged below the engagement means (50).

12. The connecting screw (22) as claimed in one of claims 1 to 11, wherein the connecting screw (22) consists of metal or ceramics, in particular of titanium, a titanium alloy, stainless steel or zirconium oxide.

13. The connecting screw (22) as claimed in one of claims 1 to 12, wherein the connecting screw (22) is formed in one part.

14. The connecting screw (22) as claimed in one of claims 1 to 13, wherein a surface normal E of the undercut surface (72) encloses an angle α of 20° to 60°, preferably of 30° to 50°, with the longitudinal axis C of the connecting screw (22).

15. The connecting screw (22) as claimed in one of claims 1 to 14, wherein a commercially available torx screwdriver can be introduced into the engagement means (50) at an angle γ of up to 20°, preferably at an angle γ of up to 30°, with respect to the longitudinal axis C of the connecting screw (22).

16. The connecting screw (22) as claimed in one of claims 1 to 15, wherein the head portion (34) has a substantially circular cylindrical outer shape, of which the outer diameter is greater than that of the shaft portion (32), an annular shoulder surface (80) running between the head portion (34) and the shaft portion (32) and a surface normal F of the annular shoulder surface (80) enclosing an angle β of preferably 0° to 45°, in particular of approximately 30°, with the longitudinal axis C of the connecting screw (22).

## Revendications

1. Vis de liaison (22) pour un implant dentaire (18), comprenant une portion de tige (32) avec une extrémité de vis inférieure (44) et une portion de tête (34) avec une extrémité de vis supérieure (46) opposée à l'extrémité de vis inférieure (44), lesquelles sont disposées le long d'un axe longitudinal central C de la vis de liaison (22), la portion de tige (32) présentant un filetage externe (48) pour la connexion à l'implant dentaire (18) et la portion de tête (34) présentant un évidement en forme de trou borgne (36) ouvert vers l'extrémité de vis supérieure (46), dans lequel évidement est façonné un moyen d'engagement (50) pour un outil rotatif (24),
l'évidement en forme de trou borgne (36) s'élargissant radialement en dessous du moyen d'engagement (50) vers l'extrémité de vis inférieure (44) et formant une contre-dépouille (58),
le moyen d'engagement (50) présentant plusieurs saillies d'engagement (60) orientées vers l'intérieur dans la direction radiale et réparties uniformément dans la direction périphérique, avec un sommet interne respectif (62), et à chaque fois centralement entre deux saillies d'engagement adjacentes (60), un renfoncement d'engagement respectif (64) orienté vers l'extérieur dans la direction radiale avec un sommet externe respectif (66),
à chaque fois deux sommets externes (66) diamétralement opposés présentant un premier espacement A l'un de l'autre et à chaque fois deux sommets internes (62) diamétralement opposés présentant un deuxième espacement B l'un de l'autre,
au moins une surface d'entraînement (68) s'étendant par-dessus les saillies d'engagement (60) et les renfoncements d'engagement (64), laquelle surface d'entraînement est limitée par une surface frontale (70) supérieure descendant radialement vers l'intérieur dans la direction de l'extrémité de vis inférieure (44) et une surface en contre-dépouille (72) inférieure montant radialement vers l'intérieur depuis la contre-dépouille (58) vers l'extrémité de vis supérieure (46), et entre la surface frontale (70) et l'au moins une surface d'entraînement (68) s'étendant une ligne de délimitation supérieure (74) et entre la surface en contre-dépouille (72) et l'au moins une surface entraînement (68) s'étendant une ligne de délimitation inférieure (76), et
la ligne de délimitation supérieure (74) et la ligne de délimitation inférieure (76) étant espacées l'une de l'autre dans la région des sommets externes (66) des renfoncements d'engagement (64) d'une distance externe Dₐ,
**caractérisée en ce que**
le rapport Dᵢ/Dₐ d'une distance interne Dᵢ entre la ligne de délimitation supérieure (74) et la ligne de délimitation inférieure (76) dans la région des sommets internes (62) des saillies d'engagement (60) à la distance externe Dₐ étant inférieur à 0,5.

2. Vis de liaison (22) selon la revendication 1, **caractérisée en ce que** le rapport Dᵢ/Dₐ est inférieur à 0,3, de préférence inférieur à 0,2 et particulièrement préférablement inférieur à 0,1.

3. Vis de liaison (22) selon la revendication 1 ou 2, **caractérisée en ce que** la ligne de délimitation inférieure (76) et la ligne de délimitation supérieure (74) viennent en contact dans la région du sommet interne (62) des saillies d'engagement (60).

4. Vis de liaison (22) selon l'une quelconque des revendications 1 à 3, **caractérisée en ce que** la distance interne Dᵢ est inférieure à 0,1 mm, de préférence inférieure à 0,05 mm, et en particulier vaut 0,0 mm.

5. Vis de liaison (22) selon l'une quelconque des revendications 1 à 4, **caractérisée en ce que** la distance externe Dₐ est comprise entre 0,3 mm et 0,8 mm, de préférence entre 0,3 mm et 0,6 mm, et en particulier vaut 0,4 mm.

6. Vis de liaison (22) selon l'une quelconque des revendications 1 à 5, **caractérisée en ce qu'**une ligne de liaison (77) entre la ligne de délimitation supérieure (74) et la ligne de délimitation inférieure (76) au niveau du sommet interne (62) est cintrée vers l'axe longitudinal central C de la vis de liaison (22).

7. Vis de liaison (22) selon l'une quelconque des revendications 1 à 6, **caractérisée en ce que** le rapport A/B est supérieur à 1,4, de préférence est supérieur à 1,45, et en particulier vaut environ 1,5.

8. Vis de liaison (22) selon l'une quelconque des revendications 1 à 7, **caractérisée en ce que** la première distance A vaut 1,8 mm à 2,0 mm, en particulier 1,9 mm.

9. Vis de liaison (22) selon l'une quelconque des revendications 1 à 8, **caractérisée en ce que** la deuxième distance B vaut 1,2 mm à 1,4 mm, en particulier 1,3 mm.

10. Vis de liaison (22) selon l'une quelconque des revendications 1 à 9, **caractérisée en ce que** le moyen d'engagement (50) présente à chaque fois six saillies d'engagement (60) et six renfoncements d'engagement (64) qui sont de préférence arrondis dans la direction périphérique.

11. Vis de liaison (22) selon l'une quelconque des revendications 1 à 10, **caractérisée en ce que** l'évidement en forme de trou borgne (36) présente en outre un profil à six pans creux, en particulier un profil à six pans creux selon la norme EN DIN ISO 10664, qui est disposé sous le moyen d'engagement (50).

12. Vis de liaison (22) selon l'une quelconque des revendications 1 à 11, **caractérisée en ce que** la vis de liaison (22) se compose de métal ou de céramique, en particulier de titane, d'un alliage de titane, d'acier inoxydable ou d'oxyde de zircone.

13. Vis de liaison (22) selon l'une quelconque des revendications 1 à 12, **caractérisée en ce que** la vis de liaison (22) est réalisée d'une seule pièce.

14. Vis de liaison (22) selon l'une quelconque des revendications 1 à 13, **caractérisée en ce qu'**une normale à la surface E de la surface en contre-dépouille (72) forme avec l'axe longitudinal C de la vis de liaison (22) un angle α de 20° à 60°, de préférence de 30° à 50°.

15. Vis de liaison (22) selon l'une quelconque des revendications 1 à 14, **caractérisée en ce qu'**un tournevis Torx usuel du commerce peut être introduit suivant un angle γ allant jusqu'à 20°, de préférence suivant un angle γ allant jusqu'à 30°, par rapport à l'axe longitudinal C de la vis de liaison (22) dans le moyen d'engagement (50).

16. Vis de liaison (22) selon l'une quelconque des revendications 1 à 15, **caractérisée en ce que** la portion de tête (34) présente une forme extérieure essentiellement cylindrique circulaire, dont le diamètre extérieur est supérieur à celui de la portion de tige (32), entre la portion de tête (34) et la portion de tige (32) s'étendant une surface d'épaulement de forme annulaire (80), une normale à la surface F de la surface d'épaulement de forme annulaire (80) formant avec l'axe longitudinal C de la vis de liaison (22) un angle β de préférence de 0° à 45°, en particulier d'environ 30°.
